# EUROPEAN PATENT APPLICATION

(11) **EP 3 477 356 A1**
(43) Date of publication of application: **01.05.2019**
(21) Application number: 18199647.1
(22) Date of filing: 10.10.2018
(51) Int. Cl.: G02B 21/14, A61B 5/00, G01B 9/02, G02B 21/16, G02B 21/36

(54) **OPTICAL SECTIONING APPARATUS USING ADVANCED MIRAU OPTICAL INTERFERENCE MICROSCOPY**

(30) Priority: 31.10.2017 TW 10637526
(71) Applicant: AcuSolutions Inc., Apia (WS)
(72) Inventor: HSU, Kuang-Yu, 103 Taipei City (TW); TSAI, Chien-Chung, 103 Taipei City (TW)
(74) Representative: Strehl Schübel-Hopf & Partner

(57) **Abstract**

An optical sectioning apparatus combining Mirau optical interference microscopy and fluorescence microscopy, including: a wide band light source ; an optical circulator, facing the wide band light source for splitting an incident light beam into a reflected light beam and a transmitted light beam; a short wavelength light source ; a first dichroic splitter, facing the short wavelength light source and the optical circulator respectively, and being capable of providing a light-blocking effect on a band of wavelengths shorter than a preset wavelength; a Mirau interference objective lens, having a collimated side facing the first dichroic splitter; a sample carrier unit facing a focal side of the Mirau interference objective lens; a projection lens, having a light entrance side facing the optical circulator; and a sensor unit facing a light exit side of the projection lens.

## Description

### BACKGROUND OF THE INVENTION

### Field of the Invention

The present invention relates to an optical sectioning apparatus, especially to an optical sectioning apparatus combining Mirau optical interference microscopy and fluorescence microscopy.

### Description of the Related Art

In conventional tumor surgery, it takes a lot of time for a pathologist to examine a frozen section to determine if a tumor is cleanly removed. As a result, when the time allowed for the surgery is shorter than the time needed for the pathologist to complete the assessment of intraoperative pathological margin, the tumor cannot be guaranteed to be cleanly removed.

During the process of preparing a frozen section of a sample, if the sample contains much water, a formed crystal ice structure will cause a damage to the tissue structure of the sample; and if the sample contains much fat, the fat will remain unfrozen at temperatures around -20°C where the other tissues are already frozen, and is therefore easy to slip off from the frozen section to cause an artifact to the frozen section.

OCT (optical coherence tomography) is a newly developed optical imaging technology, which utilizes an operational principle similar to that of the supersonic imaging technology but has a higher resolution than the supersonic imaging technology. OCT mainly utilizes the phenomena that different tissues of a sample have different responses with regard to light reflection, light absorption, and light scattering and makes use of an optical interference methodology to form an image of the sample for diagnosis. Since OCT can be performed by directly scanning a sample at room temperature without the need of including a freezing procedure and a slicing procedure, morphological artifacts induced by slicing a frozen sample containing much water or fat can be prevented, the completeness of the sample can be maintained to ensure the accuracy of a pathological assessment, the surgery time can be shortened, and surgery effect can be improved. However, since traditional optical microscopy usually has a wide depth of focus, a sample needs to undergo a real sectioning procedure to provide sections of a depth of 4-5µm, so as to avoid overlapping of tissue images of different depths, and thereby to derive a clear image.

To solve the foregoing problems, the patent US9185357 B2 discloses an optical tissue sectioning apparatus using full-field optical coherence tomography, which includes a full-field imaging interferometer and an optical sectioning imaging system. This optical tissue sectioning apparatus uses the interferometer to solve the problem resulting from the wide depth of focus by directly deriving the image from the sample, which has a resolution as precise as less than 1 µm both laterally and vertically, getting rid of the need of a fixation process, which includes a freezing procedure, a paraffin-embadded procedure, and a real sectioning procedure.

Besides, as a conventional H&E stain section uses hematoxylin to color the nuclei bluish violet and uses eosin to color cytoplasm pink, the nuclei will also be represented in bluish violet in a derived image, and the details (such as the nucleolus or heterochromatin) of each of the nuclei will be undistinguishable in the derived image. Therefore, US9185357 B2 adopts a fluorescent staining approach to exhibit an image of the details of nuclei to fulfill the need of pathology inspection.

However, there is still room for improvement in the performance of US9185357 B2, for example: (1) the system of US9185357 B2 uses two objective lenses and therefore requires more space for accommodating the two objective lenses and the cost will thereby be increased; (2) the antireflection film of the beam splitter generally has a low transmission rate for a UV band of wavelengths shorter than 400 nm. To reduce the apparatus size, ensure the strength of a fluorescent signal, shorten exposure time, and speed up an image taking process, a novel optical sectioning apparatus is needed.

### SUMMARY OF THE INVENTION

One objective of the present invention is to disclose an optical sectioning apparatus, which utilizes a Mirau interference objective lens to reduce the number of objective lenses and thereby minimize the physical size of the optical sectioning apparatus.

Another objective of the present invention is to disclose an optical sectioning apparatus, in which a first dichroic splitter will filter out a short-wavelength light beam so that when a fluorescent light beam emitted from a sample passes through the first dichroic splitter, the fluorescent light beam will have a good relative strength to shorten an exposure time and speed up taking images.

Still another objective of the present invention is to disclose an optical sectioning apparatus, in which a sensor unit has a long-wavelength-pass filter to further filter out a short-wavelength light beam to increase the relative strength of a fluorescent signal, and thereby shorten an exposure time and speed up taking images.

To attain the foregoing objectives, an optical sectioning apparatus combining Mirau optical interference microscopy and fluorescence microscopy is disclosed, including:
a wide band light source apparatus for generating a wide band light beam; an optical circulator, having a first side, a second side, and a third side, the first side facing the wide band light source apparatus for splitting an incident light beam into a reflected light beam traveling out the second side and a transmitted light beam; a short wavelength light source apparatus for generating a short wavelength light beam; a first dichroic splitter, having a first side, a second side, and a third side, with the first side facing the short wavelength light source apparatus, the third side facing the second side of the optical circulator, the first dichroic splitter being capable of providing a light-blocking effect on a band of wavelengths shorter than a preset wavelength, and the short wavelength light beam having a wavelength shorter than the preset wavelength; a Mirau interference objective lens, having a collimated side and a focal side, the collimated side facing the second side of the first dichroic splitter; a sample carrier unit facing the focal side of the Mirau interference objective lens and being used for carrying a sample stained with a fluorescent dye; a projection lens, having a light entrance side and a light exit side, with the light entrance side facing the third side of the optical circulator; and a sensor unit facing the light exit side of the projection lens.

In one embodiment, the optical circulator has a first beam splitter.

In one embodiment, the optical circulator further includes a first polarizer located at the first side thereof, a first quarter-wave plate located at the second side thereof, and a second polarizer located at the third side thereof, wherein the first polarizer has a first polarization direction, the second polarizer has a second polarization direction orthogonal to the first polarization direction, the first quarter-wave plate has a first optical axis direction, and the first optical axis direction is disposed within a range formed by the first polarization direction and the second polarization direction to enhance an interference effect and promote an imaging quality.

In one embodiment, the optical circulator further includes a PBS (polarized beam splitter) and a second quarter-wave plate located at the second side thereof.

In one embodiment, both the wide band light source apparatus and the short wavelength light source apparatus are implemented with a light source, or a combination of a light source and a grating, or a combination of a light source, a grating, and an tilt-adjustable reflective mirror, or a plurality of parallel LED stripes.

In one embodiment, the sample carrier unit further includes a white light source to provide a proper intensity of white light to pass through the Mirau interference objective lens, the white light source including a white-light LED, a laser-diode-pumped crystal rod, a laser-diode-pumped crystal fiber, a white-light halogen lamp, or a tungsten lamp.

In one embodiment, the sensor unit includes a second dichroic splitter, a two-dimensional color sensing device, a long wavelength pass filter, and a two-dimensional monochrome sensing device, in which the second dichroic splitter has a first side, a second side, and a third side, with the first side facing the projection lens, and the second dichroic splitter is used to reflect a fluorescent light beam and a white light beam to and through the third side to form an image on the two-dimensional color sensing device, and to transmit a wide band light beam through the second side to form an image on the two-dimensional monochrome sensing device. In one embodiment, the sensor unit includes a flip-type reflective mirror, a two-dimensional color sensing device, a long wavelength pass filter, and a two-dimensional monochrome sensing device, in which the flip-type reflective mirror has a flip-on state to allow a white light beam to form an image on the two-dimensional color sensing device, and has a flip-off state to allow a wide band light beam and a fluorescent light beam to form an image on the two-dimensional monochrome sensing device, and the long wavelength pass filter can be disposed between the projection lens and the flip-type reflective mirror, or be disposed between the projection lens and the second dichroic splitter, or be disposed between the flip-type reflective mirror and the two-dimensional monochrome sensing device, or be disposed between the second dichroic splitter and the two-dimensional monochrome sensing device.

In one embodiment, the wide band light beam has a wavelength range of 470nm-800nm, the short wavelength light beam has a wavelength range of 365nm-460nm, the optical circulator has an operating wavelength range of 400nm-800nm, and both the first dichroic splitter and the long wavelength pass filter have a cut-off wavelength range of 400nm-470nm. In one embodiment, the wide band light beam has a wavelength range of 650nm-1000nm, the short wavelength light beam has a wavelength range of 365nm-630nm, the optical circulator has an operating wavelength range of 400nm-1000nm, and all the first dichroic splitter, the second dichroic splitter, and the long wavelength pass filter have a cut-off wavelength range of 400nm-650nm.

In one embodiment, the optical sectioning apparatus further includes an information processing apparatus to perform an image processing process.

In one embodiment, the Mirau interference objective lens further includes an axial motion platform, and the sample carrier unit further includes a 3-D motion platform, so that by using the axial motion platform to move the Mirau interference objective lens, and using the 3-D motion platform to move the sample stained with a fluorescent dye, the information processing apparatus can derive a 3-D image of the sample accordingly.

To make it easier for our examiner to understand the objective of the invention, its structure, innovative features, and performance, we use preferred embodiments together with the accompanying drawings for the detailed description of the invention.

### BRIEF DESCRIPTION OF THE DRAWINGS

FIG. 1 illustrates a block diagram of an optical sectioning apparatus combining Mirau optical interference microscopy and fluorescence microscopy according to one embodiment of the present invention.
FIG. 2 illustrates a beam splitting operation and a focusing operation of the optical sectioning apparatus of FIG. 1.
FIG. 3a illustrates a block diagram of an optical circulator of FIG. 1 according to one embodiment of the present invention.
FIG. 3b illustrates a block diagram of an optical circulator of FIG. 1 according to another embodiment of the present invention.
FIG. 3c illustrates a block diagram of an optical circulator of FIG. 1 according to still another embodiment of the present invention.
FIG. 4 illustrates a beam combining operation and an image projecting operation of the optical sectioning apparatus of FIG. 1.
FIG. 5a illustrates a block diagram of a sensor unit of FIG. 1 according to one embodiment of the present invention.
FIG. 5b illustrates a block diagram of a sensor unit of FIG. 1 according to another embodiment of the present invention.
FIG. 5c illustrates a block diagram of a sensor unit of FIG. 1 according to another embodiment of the present invention.
FIG. 5d illustrates a block diagram of a sensor unit of FIG. 1 according to still another embodiment of the present invention.
FIG. 6a illustrates a block diagram of a Mirau optical interference objective lens of FIG. 1 according to one embodiment of the present invention.
FIG. 6b illustrates a block diagram of a Mirau optical interference objective lens of FIG. 1 according to another embodiment of the present invention.
FIG. 7 illustrates a block diagram of an optical sectioning apparatus combining Mirau optical interference microscopy and fluorescence microscopy according to still another embodiment of the present invention.

### DETAILED DESCRIPTION OF THE PREFERRED EMBODIMENTS

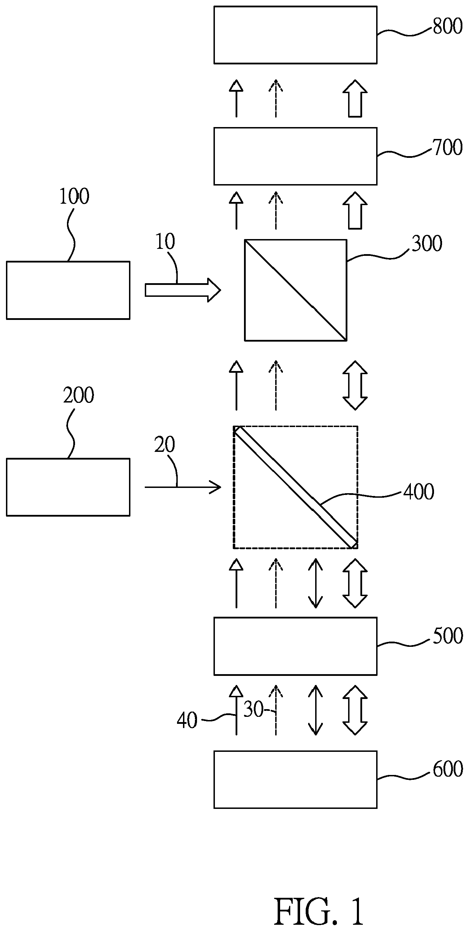

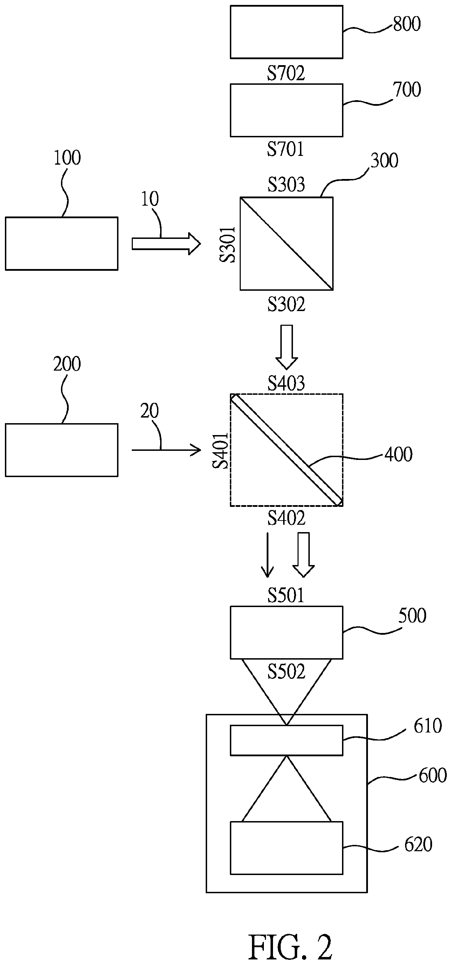

Please refer to FIG. 1-2, in which, FIG. 1 illustrates a block diagram of an optical sectioning apparatus combining Mirau optical interference microscopy and fluorescence microscopy according to one embodiment of the present invention, and FIG. 2 illustrates a beam splitting operation and a focusing operation of the optical sectioning apparatus of FIG. 1.

As illustrated in the figures, the optical sectioning apparatus combining Mirau optical interference microscopy and fluorescence microscopy includes: a wide band light source apparatus 100, a short wavelength light source apparatus 200, an optical circulator 300, a first dichroic splitter 400, a Mirau optical interference objective lens 500, a sample carrier unit 600, a projection lens 700, and a sensor unit 800.

The wide band light source apparatus 100 is used to generate a wide band light beam 10 (indicated by a hollow arrow); the short wavelength light source apparatus 200 is used to generate a short wavelength light beam 20 (indicated by a solid arrow); the sample carrier unit 600 is used to carry a sample 610 stained with a fluorescent dye, which will emit a fluorescent light beam 30 (indicated by a dashed line arrow) when the short wavelength light beam 20 is incident on it; and the sample carrier unit 600 further includes a white light source 620 to provide a white light beam 40 (indicated by a hollow arrowhead) having a proper intensity to pass through the Mirau optical interference objective lens 500.

The optical circulator 300 has a first side S301, a second side S302, and a third side S303. The wide band light source apparatus 100 is used for generating the wide band light beam 10 to be incident on the first side S301 of the optical circulator 300 and divided by the optical circulator 300 into a transmitted wide band light beam and a reflected wide band light beam, and the reflected wide band light beam will travel out the second side S302.

The short wavelength light source apparatus 200 is used to generate the short wavelength light beam 20. The first dichroic splitter 400 has a first side S401, a second side S402, and a third side S403, with the first side S401 facing the short wavelength light source apparatus 200 and reflecting the short wavelength light beam 20, and with the third side S403 facing the second side S302 of the optical circulator 300 to transmit a branch of the wide band light beam 10 from the optical circulator 300 through the second side S402.

The Mirau optical interference objective lens 500 has a collimated side S501 and a focal side S502, wherein, the collimated side S501 faces the second side S402 of the first dichroic splitter 400.

The sample carrier unit 600 faces the focusing side S502 of the Mirau optical interference objective lens 500 and is used to carry the sample 610 stained with a fluorescent dye.

The projection lens 700 has a light entrance side S701 and a light exit side S702, with the light entrance side S701 facing the third side S303 of the optical circulator 300. The sensor unit 800 faces the light exit side S702 of the projection lens 700.

In possible embodiments, the white light source 620 includes a white-light LED, a laser-diode-pumped crystal rod, a laser-diode-pumped crystal fiber, a white-light halogen lamp, or a tungsten lamp, etc.; the Mirau optical interference objective lens 500 has an operating wavelength range of 350nm-1000nm; and both the wide band light source apparatus 100 and the short wavelength light source apparatus 200 can be implemented with a light source, or a combination of a light source and a grating, or a combination of a light source, a grating, and a tilt-adjustable reflective mirror, or a plurality of parallel LED stripes (all not shown in the figure). As the light source, the grating, the tilt-adjustable reflective mirror, and the parallel LED stripes are already known in prior art, they will not be further addressed.

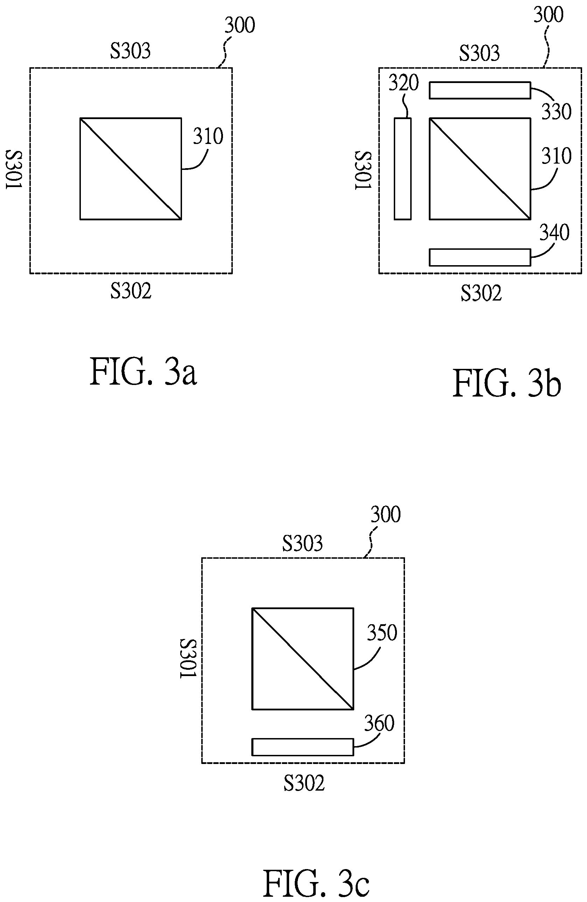

Please refer to FIG. 3a-3c, in which, FIG. 3a illustrates a block diagram of an optical circulator of FIG. 1 according to one embodiment of the present invention; FIG. 3b illustrates a block diagram of an optical circulator of FIG. 1 according to another embodiment of the present invention; and FIG. 3c illustrates a block diagram of an optical circulator of FIG. 1 according to still another embodiment of the present invention.

In the embodiment of FIG. 3a, the optical circulator 300 has a first beam splitter 310; and in the embodiment of FIG. 3b, the optical circulator 300 further includes a first polarizer 320 located at the first side S301, a first quarter-wave plate 340 located at the second side S302, and a second polarizer 330 located at the third side S303.

The first polarizer 320 has a first polarization direction; the second polarizer 330 has a second polarization direction orthogonal to the first polarization direction; the first quarter-wave plate 340 has a first optical axis direction; and the first optical axis direction is disposed within a range formed by the first polarization direction and the second polarization direction to enhance an interference effect and promote an imaging quality.

In the embodiment of FIG. 3c, the optical circulator 300 further includes a PBS (polarized beam splitter) 350 and a second quarter-wave plate 360 located at the second side S302.

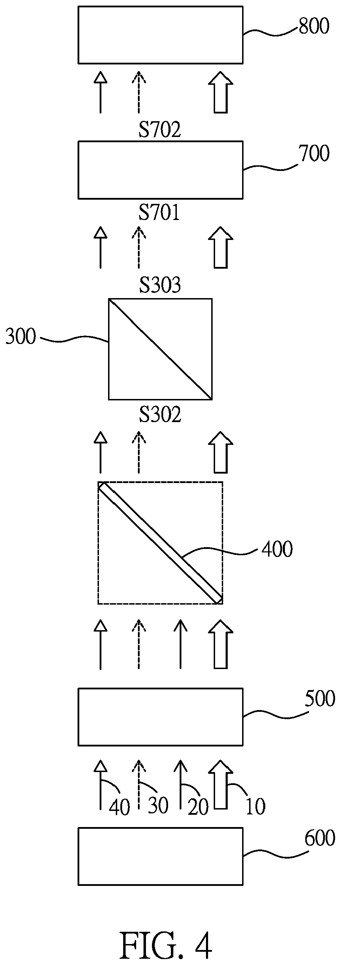

Please refer to FIG. 4, which illustrates a beam combining operation and an image projecting operation of the optical sectioning apparatus of FIG. 1.

As illustrated in FIG. 4, the sample carrier unit 600 is capable of reflecting the short wavelength light beam 20 and a branch of the wide band light beam 10, and the sample 610 stained with a fluorescent dye (not shown in this figure) will emit the fluorescent light beam 30 when hit by the short wavelength light beam 20. In addition, the white light source 620 (not shown in this figure) of the sample carrier unit 600 will emit the white light beam 40.

The first dichroic splitter 400 is used to block a band of wavelengths shorter than a preset wavelength, and the short wavelength light beam 20 has a wavelength shorter than the preset wavelength, so the short wavelength light beam 20 will be blocked by the first dichroic splitter 400, while the branch of the wide band light beam 10, the fluorescent light beam 30, and the white light beam 40 will pass through the first dichroic splitter 400.

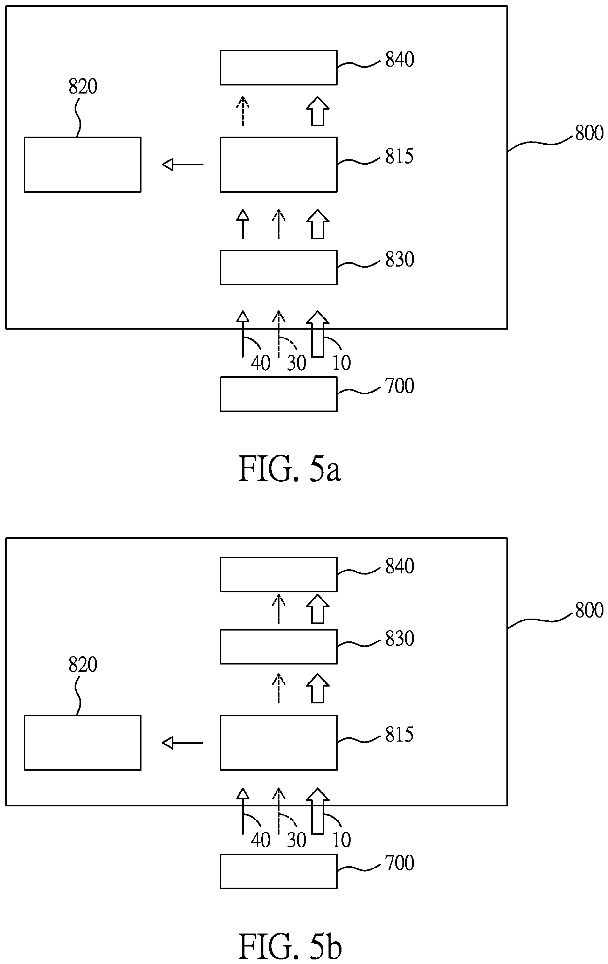

Please refer to FIG. 5a-5b, in which, FIG. 5a illustrates a block diagram of the sensor unit 800 of FIG. 1 according to one embodiment of the present invention; and

FIG. 5b illustrates a block diagram of the sensor unit 800 of FIG. 1 according to another embodiment of the present invention.

The sensor unit 800 includes a flip-type reflective mirror 815, a two-dimensional color sensing device 820, a long wavelength pass filter 830 and a two-dimensional monochrome sensing device 840.

The long wavelength pass filter 830 is used to further filter out the short wavelength light beam 20 (not shown in the figure), and the flip-type reflective mirror 815 has a flip mount (not shown in the figure) for presenting a flip-on state or a flip-off state. Since the flip-type reflective mirror is known in prior art, it will not be addressed further.

As illustrated in FIG. 5a, the long wavelength pass filter 830 is disposed between the projection lens 700 and the flip-type reflective mirror 815. When the flip-type reflective mirror 815 is in the flip-on state, the white light beam 40 will form an image on the two-dimensional color sensing device 820; when the flip-type reflective mirror 815 is in the flip-off state, the fluorescent light beam 30 and a coherent-interference resultant light beam of the wide band light beam 10 will form an image on the two-dimensional monochrome sensing device 840, respectively.

As illustrated in FIG. 5b, the long wavelength pass filter 830 is disposed between the flip-type reflective mirror 815 and the two-dimensional monochrome sensing device 840. When the flip-type reflective mirror 815 is in the flip-on state, the white light beam 40 will form an image on the two-dimensional color sensing device 820; when the flip-type reflective mirror 815 is in the flip-off state, the fluorescent light beam 30 and a coherent-interference resultant light beam of the wide band light beam 10 will form an image on the two-dimensional monochrome sensing device 840, respectively.

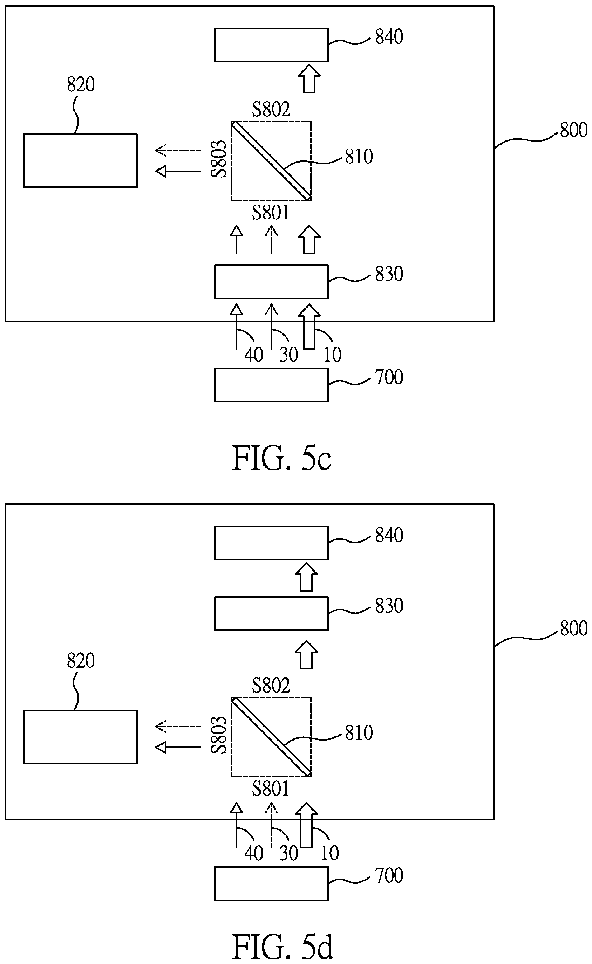

Please refer to FIG. 5c-5d, in which, FIG. 5c illustrates a block diagram of the sensor unit 800 of FIG. 1 according to another embodiment of the present invention; and FIG. 5d illustrates a block diagram of the sensor unit 800 of FIG. 1 according to still another embodiment of the present invention.

The sensor unit 800 includes a second dichroic splitter 810, a two-dimensional color sensing device 820, a long wavelength pass filter 830 and a two-dimensional monochrome sensing device 840, in which the long wavelength pass filter 830 is used to further filter out the short wavelength light beam 20 (not shown in the figure).

As illustrated in FIG. 5c, the long wavelength pass filter 830 is disposed between the projection lens 700 and the second dichroic splitter 810. The second dichroic splitter 810 reflects the fluorescent light beam 30 and the white light beam 40 to the third side S803 to form an image on the two-dimensional color sensing device 820, and transmits a coherent-interference resultant light beam of the wide band light beam 10 through the second side S802 to form an image on the two-dimensional monochrome sensing device 840.

As illustrated in FIG. 5d, the long wavelength pass filter 830 is disposed between the second dichroic splitter 810 and the two-dimensional monochrome sensing device 840. The second dichroic splitter 810 reflects the fluorescent light beam 30 and the white light beam 40 to the third side S803 to form an image on the two-dimensional color sensing device 820, and transmits a coherent-interference resultant light beam of the wide band light beam 10 through the second side S802 to form an image on the two-dimensional monochrome sensing device 840.

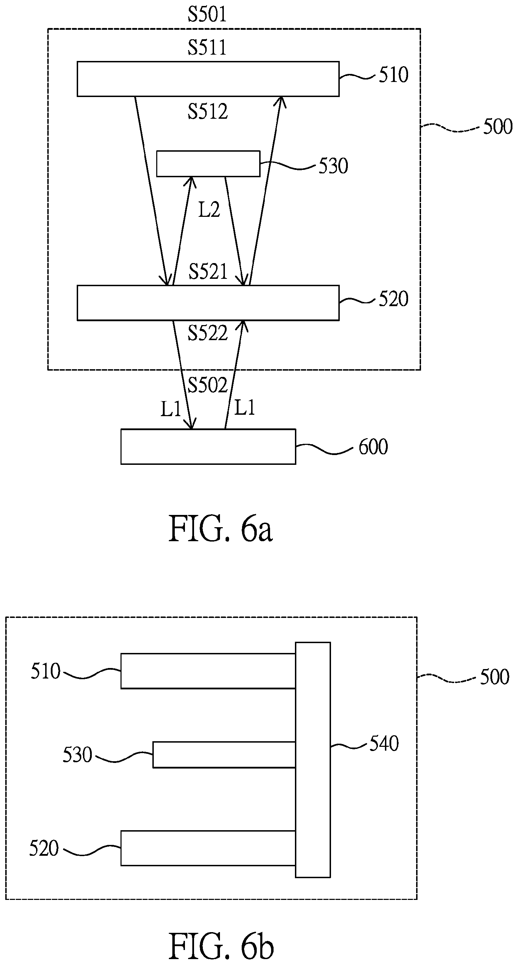

Please refer to FIG. 6a, which illustrates a block diagram of the Mirau optical interference objective lens 500 of FIG. 1 according to one embodiment of the present invention.

As illustrated in FIG. 6a, the Mirau optical interference objective lens 500 includes an objective lens 510, a second beam splitter 520, and a reflective unit 530.

The objective lens 510 has an inner collimated side S511 and an inner focal side S512, with the inner collimated side S511 facing the second side S402 (not shown in FIG. 6a) of the first dichroic splitter 400 (not shown in FIG. 6a) through the collimated side S501; the second beam splitter 520 has a first side S521 and a second side S522, the first side S521 facing the inner focal side S512 of the objective lens 510 for splitting an incident light beam into a first focused light beam L1 passing out the second side S522, and a second focused light beam L2 reflected from the first side S521; and a reflective unit 530 is located between the objective lens 510 and the second beam splitter 520 for reflecting the second focused light beam L2 of the second beam splitter 520, where the second focused light beam L2 reflected by the reflective unit 530 will be combined with the first focused light beam L1 reflected by the sample carrier unit 600 to result in an optical interference phenomenon.

When the wide band light beam 10 has a wavelength range of 470nm-800nm, the flip-type reflective mirror 815 is required, the short wavelength light beam 20 (not shown in this figure) has a wavelength range of 365nm-460nm, the optical circulator 300 (not shown in this figure) has an operating wavelength range of 400nm-800nm, and the first dichroic splitter 400 has a cut-off wavelength range of 400nm-470nm.

When the wide band light beam 10 has a wavelength range of 650nm-1000nm, the flip-type reflective mirror 815 or the second dichroic splitter 810 can be adopted, the short wavelength light beam 20 has a wavelength range of 365nm-630nm, the optical circulator 300 has an operating wavelength range of 400nm-1000nm, and all the first dichroic splitter 400, the second dichroic splitter 810, and the long wavelength pass filter 830 have a cut-off wavelength range of 400nm-650nm.

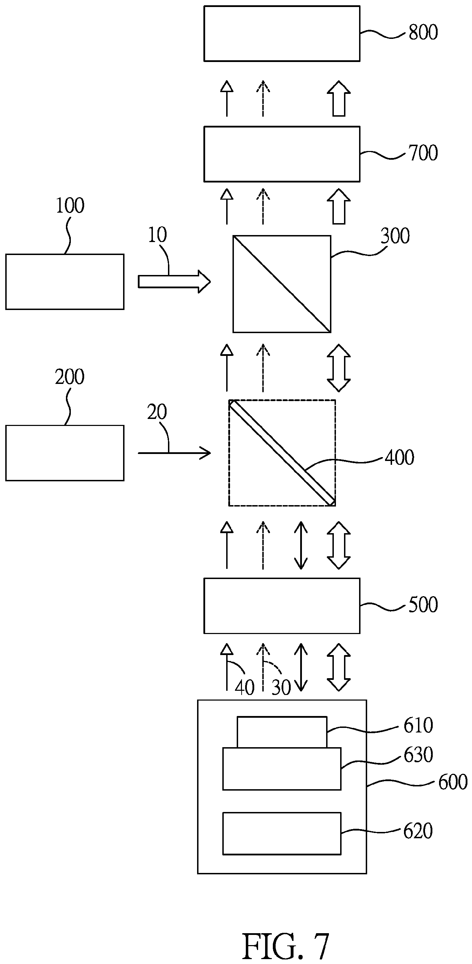

Please refer to FIG. 6b and FIG. 7, in which, FIG. 6b illustrates a block diagram of a Mirau optical interference objective lens of FIG. 1 according to another embodiment of the present invention, and FIG. 7 illustrates a block diagram of an optical sectioning apparatus combining Mirau optical interference microscopy and fluorescence microscopy according to still another embodiment of the present invention.

As illustrated in FIG. 6b, the Mirau optical interference objective lens 500 includes an objective lens 510, a second beam splitter 520, a reflective unit 530, and an axial motion platform 540.

As illustrated in FIG. 7, the sample carrier unit 600 further includes a 3-D motion platform 630. In addition, the optical sectioning apparatus combining Mirau optical interference microscopy and fluorescence microscopy of the present invention can include an information processing apparatus (not shown in this figure) to perform an image processing process.

By using the axial motion platform 540 to move the objective lens 510, the second beam splitter 520 and the reflective unit 530 of the Mirau optical interference objective lens 500, and using the 3-D motion platform 630 to move the sample 610 stained with a fluorescent dye, the information processing apparatus (not shown in this figure) can derive a 3-D image (not shown in this figure) of the sample accordingly. Since the formation process of a 3-D image is known in prior art, it will not be addressed further.

Due to the novel schemes disclosed above, the present invention possesses the advantages as follows:
1. The optical sectioning apparatus of the present invention, by integrating a Mirau interference objective lens into the apparatus, is capable of reducing the number of objective lenses and can thereby minimize the physical size of the optical sectioning apparatus.
2. The optical sectioning apparatus of the present invention ensures that when a fluorescent light beam emitted from a sample passes through a first dichroic splitter, since the first dichroic splitter will filter out a short-wavelength light beam, the fluorescent light beam will have a good relative strength when it passes through the first dichroic splitter, thereby shortening an exposure time and speeding up taking images.
3. The optical sectioning apparatus of the present invention has a long wavelength pass filter installed in a sensor unit to further filter out a short-wavelength light beam to increase the relative strength of a fluorescent signal, and thereby shortening an exposure time and speeding up taking images.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance over the conventional structure and further complies with the patent application requirements and is submitted to the Patent and Trademark Office for review and granting of the commensurate patent rights.

## Claims

1. An optical sectioning apparatus combining Mirau optical interference microscopy and fluorescence microscopy, including:
a wide band light source apparatus (100) for generating a wide band light beam (10);
an optical circulator (300), having a first side (S301), a second side (S302), and a third side (S303), the first side (S301) facing the wide band light source apparatus (100) for splitting an incident light beam into a reflected light beam traveling out the second side and a transmitted light beam;
a short wavelength light source apparatus (200) for generating a short wavelength light beam (20);
a first dichroic splitter (400), having a first side (S401), a second side (S402), and a third side (S403), with the first side (S401) facing the short wavelength light source apparatus (200), the third side (S403) facing the second side (S302) of the optical circulator (300), the first dichroic splitter (400) being capable of providing a light-blocking effect on a band of wavelengths shorter than a preset wavelength, and the short wavelength light beam (20) having a wavelength shorter than the preset wavelength;
a Mirau interference objective lens (500), having a collimated side (S501) and a focal side (S502), the collimated side (S501) facing the second side (S402) of the first dichroic splitter (400);
a sample carrier unit (600) facing the focal side (S502) of the Mirau interference objective lens (500) and being used for carrying a sample (610) stained with a fluorescent dye;
a projection lens (700), having a light entrance side (S701) and a light exit side (S702), with the light entrance side (S701) facing the third side (S303) of the optical circulator (300); and
a sensor unit (800) facing the light exit side (S702) of the projection lens (700).

2. The optical sectioning apparatus combining Mirau optical interference microscopy and fluorescence microscopy as disclosed in claim 1, wherein the optical circulator (300) has a first beam splitter (310).

3. The optical sectioning apparatus combining Mirau optical interference microscopy and fluorescence microscopy as disclosed in claim 2, wherein the optical circulator (300) further includes a first polarizer (320) located at the first side (S301) thereof, a first quarter-wave plate (340) located at the second side (S302) thereof, and a second polarizer (330) located at the third side (S303) thereof, wherein the first polarizer (320) has a first polarization direction, the second polarizer (330) has a second polarization direction orthogonal to the first polarization direction, the first quarter-wave plate (340) has a first optical axis direction, and the first optical axis direction is disposed within a range formed by the first polarization direction and the second polarization direction to enhance an interference effect and promote an imaging quality.

4. The optical sectioning apparatus combining Mirau optical interference microscopy and fluorescence microscopy as disclosed in claim 1, wherein the optical circulator (300) further includes a polarized beam splitter (350) and a second quarter-wave plate (360) located at the second side (S302) thereof.

5. The optical sectioning apparatus combining Mirau optical interference microscopy and fluorescence microscopy as disclosed in claim 1, wherein both the wide band light source apparatus (100) and the short wavelength light source apparatus (200) are implemented with a light source, or a combination of a light source and a grating, or a combination of a light source, a grating, and an tilt-adjustable reflective mirror, or a plurality of parallel LED stripes.

6. The optical sectioning apparatus combining Mirau optical interference microscopy and fluorescence microscopy as disclosed in claim 1, wherein the sample carrier unit (600) further includes a white light source (620) to provide a proper intensity of white light to pass through the Mirau interference objective lens (500), and the white light source (620) includes a white-light LED, a laser-diode-pumped crystal rod, a laser-diode-pumped crystal fiber, a white-light halogen lamp, or a tungsten lamp.

7. The optical sectioning apparatus combining Mirau optical interference microscopy and fluorescence microscopy as disclosed in claim 1, wherein the sensor unit (800) includes a second dichroic splitter (810), a two-dimensional color sensing device (820), a long wavelength pass filter (830), and a two-dimensional monochrome sensing device (840), in which the second dichroic splitter (810) has a first side (S801), a second side (S802), and a third side (S803), with the first side (S801) facing the projection lens (700), and the second dichroic splitter (810) is used to reflect a fluorescent light beam (30) and a white light beam (40) to and through the third side (S803) to form an image on the two-dimensional color sensing device (820), and to transmit a wide band light beam (10) through the second side (S802) to form an image on the two-dimensional monochrome sensing device (840); or the sensor unit (800) includes a flip-type reflective mirror (815), a two-dimensional color sensing device (820), a long wavelength pass filter (830), and a two-dimensional monochrome sensing device (840), in which the flip-type reflective mirror (815) has a flip-on state to allow a white light beam (40) to form an image on the two-dimensional color sensing device (820), and has a flip-off state to allow a wide band light beam (10) and a fluorescent light beam (30) to form an image on the two-dimensional monochrome sensing device (840), and the long wavelength pass filter (830) can be disposed between the projection lens (700) and the flip-type reflective mirror (815), or be disposed between the projection lens (700) and the second dichroic splitter (810), or be disposed between the flip-type reflective mirror (815) and the two-dimensional monochrome sensing device (840), or be disposed between the second dichroic splitter (810) and the two-dimensional monochrome sensing device (840).

8. The optical sectioning apparatus combining Mirau optical interference microscopy and fluorescence microscopy as disclosed in claim 5, wherein the wide band light beam (10) has a wavelength range of 470nm-800nm, the short wavelength light beam (20) has a wavelength range of 365nm-460nm, the optical circulator (300) has an operating wavelength range of 400nm-800nm, and both the first dichroic splitter (400) and the long wavelength pass filter (830) have a cut-off wavelength range of 400nm-470nm; or the wide band light beam (10) has a wavelength range of 650nm-1000nm, the short wavelength light beam (20) has a wavelength range of 365nm-630nm, the optical circulator (300) has an operating wavelength range of 400nm-1000nm, and all the first dichroic splitter (400), the second dichroic splitter (810), and the long wavelength pass filter (830) have a cut-off wavelength range of 400nm-650nm.

9. The optical sectioning apparatus combining Mirau optical interference microscopy and fluorescence microscopy as disclosed in claim 1, further including an information processing apparatus to perform an image processing process.

10. The optical sectioning apparatus combining Mirau optical interference microscopy and fluorescence microscopy as disclosed in claim 1, wherein the Mirau interference objective lens (500) further includes an axial motion platform (540), and the sample carrier unit (600) further includes a 3-D motion platform (630), so that by using the axial motion platform (540) to move the Mirau interference objective lens (500), and using the 3-D motion platform (630) to move the sample (610) stained with a fluorescent dye, the information processing apparatus can derive a 3-D image of the sample accordingly.
